# EUROPEAN PATENT APPLICATION

(11) **EP 0 949 485 A2**
(43) Date of publication of application: **13.10.1999**
(21) Application number: 99201006.6
(22) Date of filing: 02.04.1999
(51) Int. Cl.: G01F 1/66

(54) **Method and apparatus for measuring physical parameters**

(30) Priority: 07.04.1998 NL 1008827
(71) Applicant: Roosnek, Nico, 2592 AC Den Haag (NL)
(72) Inventor: Roosnek, Nico, 2592 AC Den Haag (NL)

(57) **Abstract**

Method and apparatus for determining a speed of a flow of a liquid or a gas in a pipe by measuring the travel time of ultrasonic pulses. A received ultrasonic pulse is digitized and transformed to a complex digital signal by a Hilbert filter. From the phase history and the amplitude history of the pulse, and from ultrasonic pulses that were received previously, the speed of the flow is determined.

## Description

The invention relates to a method for measuring physical parameters of a fluid flow in a pipe, where at least a first and a second transducer are fixed in or onto the pipe in an axially displaced relationship, where in an alternating mode one transducer sends an ultrasonic vibration via the pipe into the flowing fluid while the other transducer receives this ultrasonic vibration via the flowing fluid and converts it into an electric signal, which electric signal is applied to a signal processor, in which signal processor the electric signal is converted by an analog-to-digital converter into a digital signal, from which at least a travel time of the ultrasonic signal is subsequently determined.

A method of this kind has been disclosed in patent specification US-A 5,224,482. According to the known method an oscillator signal is used to generate the ultrasonic vibration; the received electric signal is digitized with the aid of a quadrature detector and two analog-to-digital converters. The application of two analog-to-digital converters tends to increase the costs and entails the fundamental disadvantage that, due to differences in gain, offset and timing, errors will occur in the digital signals obtained, which will have a negative effect on the accuracy of the measurement.

The method according to the invention obviates these drawbacks. It is characterized, according to an aspect of the invention, in that the digital signal is transformed by a Hilbert filter into a complex digital signal, and that the travel time of the ultrasonic signal is determined on the basis of a phase history and an amplitude history of the complex digital signal.

It should be noted that the Hilbert filter per se is known from, for example, "Theory and application of digital signal processing, L.R. Rabiner and B. Gold, Prentice-Hall, Inc, 1975, page. 70-73.

The invention further relates to an apparatus for measuring physical parameters of a fluid flowing in a pipe, comprising transmitter means, receiver means and a digital signal processor, connected to the receiver means and provided with an analog-to-digital converter, where under operational conditions at least a first ultrasonic transducer, fixed on or into the pipe may be connected to the transmitter means for generating an ultrasonic signal, and at least a second ultrasonic transducer, fixed on or into the pipe and translated in an axial sense, may be connected to the receiver means for receiving the ultrasonic signal.

According to an aspect of the invention the inventive apparatus is characterized in that the digital signal processor is provided with a Hilbert filter, for deriving a complex digital signal, representing the received ultrasonic signal, from the digital signal as supplied by the analog-to-digital converter.

A further favourable embodiment of the inventive method, which can be applied in situations where a signal-to-noise ratio of the received signal is relatively small, is characterized in that the digital signal processor transforms the complex digital signal into a digital amplitude signal and a corresponding digital phase signal. According to the underlying inventive principle, it is essential that all information available in the ultrasonic signal is used while trying to determine a travel time of the ultrasonic signal.

According to a further aspect of the invention the method may be used with a signal-to-noise ratio that is even smaller, if the history of the amplitude of the received signal is taken into account. This embodiment of the method is accordingly characterized in that the digital signal processor comprises an amplitude memory, in which a filtered digital amplitude signal, as obtained from previous measurements, is stored and that every time a new filtered digital amplitude signal is determined from the digital amplitude signal and from the stored filtered digital amplitude signal.

According to a further aspect of the invention the method may be used with a signal-to-noise ratio that is even smaller, if the history of the phase of the received signal is taken into account. This embodiment is characterized in that the digital signal processor comprises a frequency memory, in which an estimated average frequency of the ultrasonic signal, obtained from previously obtained digital phase signals, is stored,

Next the physical parameters are estimated, where the weighted least square method is used to estimate a phase history modulo 2π from the estimated average frequency and from the digital phase signal. In fact, a straight line is fitted to the series of phases with a slope that is determined by the estimated frequency and with weighting factors as determined by the filtered digital amplitude signals. The travel time of the ultrasonic signal may subsequently be determined on the basis of a zero crossing in the estimated phase history that is closest to a maximum in the filtered digital amplitude signal.

A favourable embodiment of the inventive method, which can be applied in situations where the pipe is thick-walled and where the fluid has a low density, as is the case while measuring a flow speed of steam, is characterized in that the digital signal processor comprises a crosstalk memory, in which a first complex digital signal is stored, representing crosstalk signals via the pipe between the first and the second transducer, and that the first complex digital signal is subtracted from a complex digital signal before the complex digital signal is further processed.

The invention will now be further explained with reference to the following figures, in which:
- Fig. 1: schematically represents how the apparatus according to the invention may be used;
- Fig. 2A: represents a possible wave shape of a received ultrasonic vibration;
- Fig. 2B: represents a frequency spectrum of this wave shape;
- Fig. 3: represents a block diagram of a possible embodiment of the apparatus.

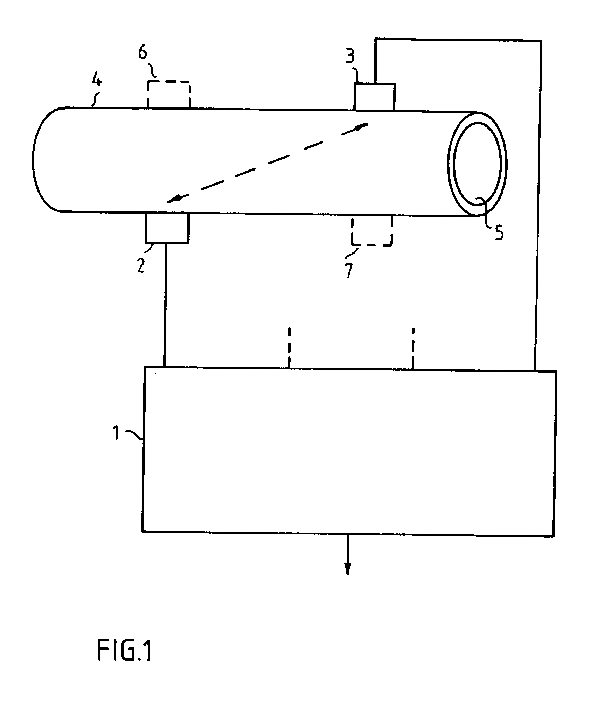

Fig. 1 schematically represents how the apparatus 1 according to the invention may be used. While in use the apparatus 1 is connected to a first transducer 2 and a second transducer 3, which are both fixed onto a pipe 4, through which a fluid 5 flows, the flow speed of which should be determined continuously. For that purpose, apparatus 1 periodically feeds an electric signal to for example transducer 2, in response to which transducer 2 generates an ultrasonic vibration. This ultrasonic vibration propagates, via pipe 4 and fluid 5, to transducer 3, which converts the received ultrasonic vibration into an electric signal from which the flow speed can be deducted by apparatus 1, which flow speed is shown on a display or is output for further use. The display may of course form part of apparatus 1. Besides the flow speed apparatus 1 can also determine the speed of sound in fluid 5 and moreover the temperature of fluid 5, although the last parameter is usually of minor importance. Mostly, transmitters 2 and 3 are used alternately as a transmitter or a receiver, such that an upstream measurement and a downstream measurement can be made. The advantage is that in processing the combined received signals the speed of sound is no longer of importance, which enables a measurement to be made with a higher precision. Moreover, it is possible to connect a third transducer 6 and a fourth transducer 7 to apparatus 1, so that in a completely analogously way the flow speed of fluid 5 may be determined. The advantage here is that if the signal-to-noise ratio of electric signals, output by the transducers is becoming small, a combined processing of the basically independent measurements may result in measurements with an acceptable precision. The signal-to-noise ratio becomes small if the wall thickness of pipe 4 is large, or if the distance between transducers 2 and 3 is large, or if the density of fluid 5 is low, or if the fluid flow is very turbulent.

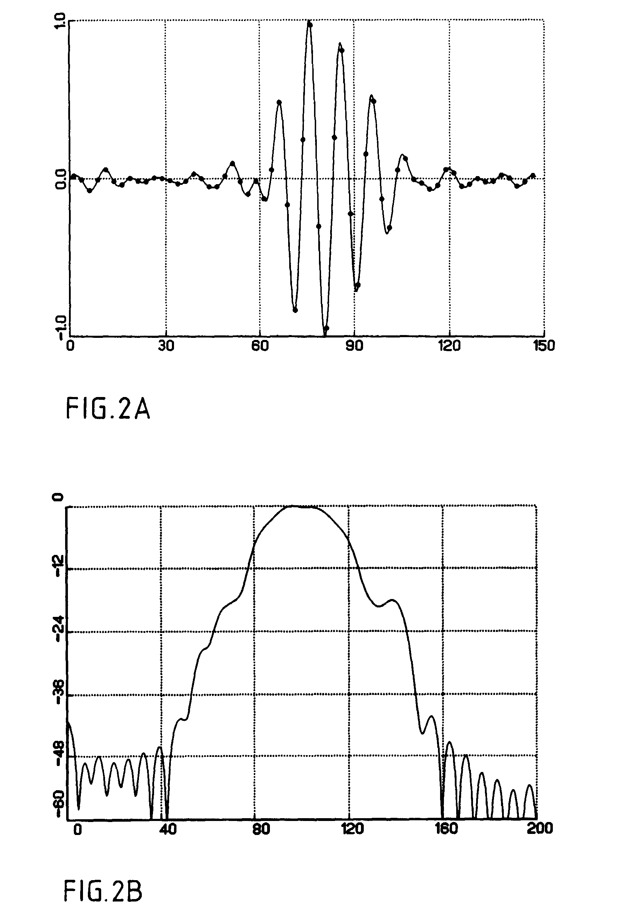

Fig. 2A shows a possible wave shape of a received ultrasonic vibration. Usually a very short, unipolar electric signal is applied to the transmitting transducer, comparable to a Dirac-pulse in response to which the transducer outputs a short, damped vibration. The frequency of the vibration is thereby determined by the resonance frequency of the transducer while the length of the vibration is substantially determined by the internal damping of the transducer and the damping caused by pipe 4. The receiving transducer is also set vibrating upon the reception of the damped ultrasonic vibration and outputs an electric signal as shown. In Fig. 2A the signal-to-noise ratio is about 20 dB; consequently it is a strong signal. In an apparatus according to the invention, signals with a far smaller signal-to-noise ratio may be processed. In Fig. 2A the horizontal scale is in microseconds, the measured values have been sampled with a frequency of 400 Kc/s. The vertical scale only shows a ratio with respect to the maximum signal.

Fig. 2B shows the frequency spectrum of the received ultrasonic vibration as shown in Fig. 2A. The horizontal scale is in Kc/s, the vertical scale in dB. It clearly shows that we have to do with a wide band signal.

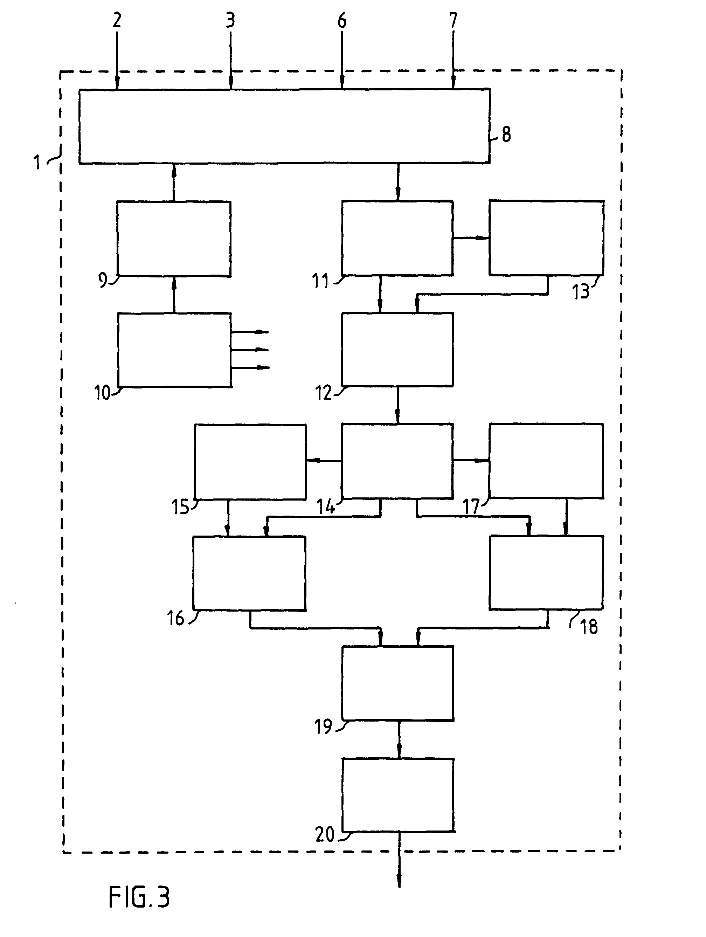

Fig. 3 represents a block diagram of a possible embodiment of apparatus 1. As shown, the transducers 2,3,6,7 are via a multiplexer 8 connected to a transmitter 9 and a receiver 10, such that one upstream transducer and one downstream transducer is connected. Transmitter 1 is arranged for producing a short voltage pulse, triggered by a timing unit 10, which pulse is guided to a transducer. After some time, dependent on the distance between the transducers, the type of fluid, the flow speed of the fluid and to some extent to the temperature of the fluid, the receiving transducer will output an electric signal of a type as shown in Fig. 2A. The shape and the signal-to-noise ratio of the electric signal strongly depend on the diameter and the thickness of pipe 4 and of the flow speed, the type and the temperature of the fluid 5. Therefore the travel time of the ultrasonic pulse is measured, according to the invention, by utilizing all information available in the electric signal, by taking advantage of the prior knowledge of the electric signal and the known average frequency of the signal. The electric signal, as output by the receiving transducer, is supplied to receiver means 11, comprising a preamplifier, a bandpass filter, an analog-to-digital converter and a Hilbert filter. The Hilbert filter converts a flow of single digital measurements into a flow of complex digital measurements with half the sample rate, in a manner known in the art.

The complex digital signals, representing the received electric signals, as output by the Hilbert filter, are supplied to a subtractor 12 in which a crosstalk signal, which has reached the receiving transducer via pipe 4 instead of via the fluid, is removed from the complex digital signal. Before the actual measurement of the flow speed is started, all crosstalk signals are determined for every possible combination of transducers, and stored in a crosstalk memory 13. This is effected easily by measuring without the fluid 5, or by introducing a wad into pipe 4, which does not pass the ultrasonic pulse. It is also possible to determine the crosstalk signal by measuring a number of ultrasonic pulses under different circumstances and by averaging the complex digital signals, in which averaging process a changing component in these complex digital signals disappears and the crosstalk signal is retained. Once the crosstalk signal is known, it may simply be subtracted from the complex digital signal in subtractor 12 for obtaining a substantially crosstalk free complex digital signal.

The crosstalk-free complex digital signal thus obtained is subsequently supplied to a converter 14, arranged for converting this signal to a digital amplitude signal and a digital phase signal, which conversion as such is well known in the art. If the complex digital signal is for example represented by a series:
S(t₁,...,tₙ}
then converter 14 produces from this the digital amplitude signal and the digital phase signal:
A(t₁,..., tₙ) and ϕ(t₁,...,tₙ)
The digital amplitude signal is supplied for further processing to an amplitude memory 15 in which is stored a filtered digital amplitude signal, obtained from preceding measurements, which is supplied to an amplitude filter 16 together with a digital amplitude signal. Amplitude filter 16 determines a new filtered digital amplitude signal from α times the filtered digital amplitude signal and (1-α) times the digital amplitude signal, with α ε (0,6-0,95). The location of the maximum in the new filtered amplitude signal approximately indicates the travel time of the ultrasonic pulse.

For further processing the digital phase signal is connected to a frequency memory 17, in which an average frequency of the ultrasonic signal is stored, as estimated from preceding measurements. This estimated average frequency is supplied to a frequency filter 18 together with the digital phase signal. On the basis of a well known least square method, frequency filter 18 determines a frequency of the ultrasonic pulse from the digital phase signal. Next, a new estimated average frequency is determined from this frequency and from the estimated average frequency according to α times the estimated average frequency and (1-α) times the latest determined frequency. In this case α is taken almost 1, as the frequency hardly changes.

The new filtered amplitude signal, the maximum in the new filtered amplitude signal, the estimated average frequency and the digital phase signal are then supplied to weighting means 19, which determine an estimated phase history of the digital phase signal by applying a weighted least square method. According to this method, a line is fitted through the successive unwrapped phases of the digital phase signal, in which process the new estimated average frequency determines the direction of the line and the new filtered amplitude signal supplies the weighting factors, because the phase information emanating from a small measured value is relatively unreliable. Finally the travel time of the ultrasonic pulse is determined from the zero crossing of the estimated phase history that is nearest to the maximum of the new filtered amplitude signal. From the travel time of an upstream and a downstream running pulse the flow speed of the fluid is determined then in a manner well known in the art.

As the frequency of the ultrasonic pulse is a function of the temperature of the ultrasonic transducer, which in turn depends on the temperature of fluid 5, this temperature is known as well.

If the signal-to-noise ratio becomes very small, the weighting means 19 could incidentally point to a faulty zero crossing in the estimated phase history, causing a steplike change in the flow speed as determined. In order to prevent this, a filter 20 is added. The travel time as measured is supplied to this filter, for all combinations as measured with transducers 2,3,6,7. Filter 20 averages the travel times thus obtained and discards, in an obvious manner, the measurements that show a steplike change by not using them in the averaging process.

It is possible to improve the signal-to-noise ratio by arranging transmitter means 9 such that a relatively long, coded pulse is transmitted by the transmitting transducer, and by providing receiver means 11 with a correlator for the coded pulse. The correlation peak, as produced by the correlator, has substantially the same shape as the pulse shown in Fig. 2A, which implicates that the processing in fact can be used unchanged.

## Claims

1. Method for measuring physical parameters of a fluid flow in a pipe, where at least a first and a second transducer are fixed in or onto the pipe in an axially displaced relationship, where in an alternating mode one transducer sends an ultrasonic vibration via the pipe into the flowing fluid while the other transducer receives this ultrasonic vibration via the flowing fluid and converts it into an electric signal, which electric signal is applied to a signal processor, in which signal processor the electric signal is converted by an analog-to-digital convertor into a digital signal, from which at least a travel time of the ultrasonic signal is subsequently determined, characterized in that dat the digital signal is transformed by a Hilbert filter into a complex digital signal, and that the travel time of the ultrasonic signal is determined on the basis of a phase history and an amplitude history of the complex digital signal.

2. Method according to claim 1, characterized in that the digital signal processor transforms the complex digital signal into a digital amplitude signal and a corresponding digital phase signal.

3. Method according to claim 2, characterized in that the digital signal processor comprises an amplitude memory, in which a filtered digital amplitude signal as obtained from previous measurements is stored, and that every time a new filtered digital amplitude signal is determined from the digital amplitude signal and from the stored filtered digital amplitude signal.

4. Method according to claim 3, characterized in that the digital signal processor comprises a frequency memory, in which an estimated average frequency of the ultrasonic signal, obtained from previously obtained digital phase signals, is stored.

5. Method according to claim 4, characterized in that with the weighted least square method a phase history is estimated from the estimated frequency and from the digital phase signal.

6. Method according to claim 5, characterized in that the filtered digital amplitude signal supplies the weighting factors.

7. Method according to claim 6, characterized in that a travel time of the ultrasonic signal is determined based on a zero crossing in the estimated phase history that is closest to a maximum in the filtered digital amplitude signal.

8. Method according to claim 1, characterized in that the digital signal processor comprises a crosstalk memory, in which a first complex digital signal is stored,
representing crosstalk signals via the pipe between the first and the second transducer, and that the first complex digital signal is subtracted from a complex digital signal before the complex digital signal is further processed.

9. Method according to claim 8, characterized in that the first complex digital signal is obtained from at least one complex digital signal, measured with a pipe without fluid being present.

10. Method according to claim 8, characterized in that the first complex digital signal is obtained from averaging complex digital signals.

11. Apparatus for measuring physical parameters of a fluid flowing in a pipe, comprising transmitter means, receiver means and a digital signal processor, connected to the receiver means and provided with an analog-to-digital converter, where under operational conditions at least a first ultrasonic transducer, fixed on or into the pipe may be connected to the transmitter means for generating an ultrasonic signal, and at least a second ultrasonic transducer, fixed on or into the pipe and translated in an axial sense, may be connected to the receiver means for receiving the ultrasonic signal, characterized in that the digital signal processor is provided with a Hilbert filter, for deriving a complex digital signal, representing the received ultrasonic signal, from the digital signal as supplied by the analog-to-digital converter.

12. Apparatus according to claim 11, characterized in that the digital signal processor is arranged for converting a complex digital signal into a digital amplitude signal and a corresponding digital phase signal.

13. Apparatus according to claim 12, characterized in that the digital signal processor is provided with an amplitude memory, for storing a filtered digital amplitude signal, derived from earlier measurements, and a frequency memory, for storing an estimated average frequency, derived from digital phase signals from earlier measurements.

14. Apparatus according to claim 13, characterized in that the digital signal processor is provided with filter means for deriving a new filtered digital amplitude signal from a digital amplitude signal and a filtered digital amplitude signal stored in the amplitude memory and for deriving a new average frequency of the received ultrasonic signal from a digital phase signal and from an average frequency stored in the frequency memory.

15. Apparatus according to claim 14, characterized in that the digital signal processor is provided with weighting means, for estimating with a weighted least square method a phase history, from the estimated frequency of the ultrasonic vibration and the series of phase estimations, where the filtered digital amplitude signal provides the weighting factors.

16. Apparatus according to claim 15, characterized in that the digital signal processor is arranged for deriving a travel time for the ultrasonic signal from the phase history.

17. Apparatus according to claim 11, characterized in that the digital signal processor is moreover provided with a crosstalk memory for storing a crosstalk representing first complex digital signal, derived from received complex digital signals, and with a subtractor, for subtracting the first complex digital signal from a complex digital signal before this complex digital signal is further processed.

18. Flow meter for measuring a speed of a fluid in a pipe, comprising at least two ultrasonic transducers and an apparatus as claimed in one of the claims 11 to 17.
